# EUROPÄISCHE PATENTANMELDUNG

(11) **EP 3 072 837 A1**
(43) Veröffentlichungstag der Anmeldung: **28.09.2016**
(21) Anmeldenummer: 16158461.0
(22) Anmeldetag: 03.03.2016
(51) Int. Cl.: B65G 57/32, B65G 61/00

(54) **VERFAHREN UND VORRICHTUNG ZUR HANDHABUNG VON ARTIKELN, STÜCKGÜTERN BZW. GEBINDEN**

(30) Priorität: 23.03.2015 DE 102015104324
(71) Anmelder: Krones Aktiengesellschaft, 93073 Neutraubling (DE)
(72) Erfinder: KOLLMUSS, Manuel, 93073 Neutraubling (DE); ESCHLBECK, Richard, 93073 Neutraubling (DE); RUEEGG, Hubert, 93073 Neutraubling (DE)
(74) Vertreter: Benninger, Johannes

(57) **Zusammenfassung**

Verfahren zur Manipulierung Artikeln (20), die in Förderrichtung (38) einer Handhabungsstation (64) zugeführt und dort mittels einer Manipulationseinrichtung (72) innerhalb eines definierten Manipulationsbereiches aufgenommen, und dadurch jeweils in eine Anordnung zueinander gebracht werden. Die Anordnungen werden anschließend zur Ausbildung von gestapelten Artikellagen paarweise oder dreifach übereinander gestapelt.

## Beschreibung

Die vorliegende Erfindung betrifft ein Verfahren sowie eine Anordnung zur Beförderung, Handhabung, Manipulierung, Stapelung und/oder Palettierung von paarweise oder mehrfach übereinander gestapelten Artikeln, Stückgütern und/oder Gebinden mit den Merkmalen der unabhängigen Ansprüche 1 bzw. 5.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Bei bekannten Förder- und Handhabungsanlagen werden die Gebinde einzeln hintereinander transportiert. Bei der anschließenden Gruppierung und Lagenbildung werden zwar oft mehrere Gebinde gleichzeitig positioniert, was aber jeweils nur für hintereinander angeordnete Gebinde möglich ist. Somit wird bei der Erzeugung einer palettierfähigen Lage immer nur jeweils eine Lage Gebinde erzeugt. Um den Gebindedurchsatz solcher Anlagen zu erhöhen und die Palettierungsgeschwindigkeit zu steigern, kann das Gruppiersystem einzelne oder mehrere Gebinde in einem ersten Arbeitsschrift übereinander stapeln und in einem zweiten Schritt dann positionieren.

Aus der US 5 469 687 A ist eine Anlage zur Handhabung und Beförderung von Gebinden bekannt, bei dem die Gebinde, jeweils bestehend aus sechs zusammengefassten Getränkedosen, im Verlauf ihres Förderwegs paarweise übereinandergestapelt werden, um sie anschließend einer Verpackungsstation zuzuführen.

Das vorrangige Ziel der vorliegenden Erfindung besteht darin, die Verarbeitungsschritte bei der Förderung, Handhabung, Manipulierung und anschließenden Palettierung von Artikeln, Stückgütern und/oder Gebinden zu beschleunigen und ein entsprechend modifiziertes und verbessertes System zur Handhabung von Artikeln, Gebinden, Gruppierungen oder Stückgütern zur Verfügung zu stellen, das bei einfacher Steuerbarkeit einen beschleunigten Durchsatz für die zu palettierenden und/oder zu stapelnden Artikel, Stückgüter und/oder Gebinde ermöglicht.

Dieses Ziel der Erfindung wird mit den Gegenständen der unabhängigen Ansprüche erreicht. Merkmale vorteilhafter Weiterbildungen der Erfindung finden sich in den jeweiligen abhängigen Ansprüchen. So schlägt die vorliegende Erfindung zur Erreichung des genannten Ziels ein Verfahren zur Beförderung, Handhabung, Manipulierung, Stapelung und/oder Palettierung von Artikeln, Stückgütern und/oder Gebinden vor, bei dem die Artikel, Stückgüter und/oder Gebinde in Förderrichtung einer Handhabungs- und/oder Gruppierstation zugeführt und dort mittels einer Handhabungsund/oder Manipulationseinrichtung innerhalb eines definierten Manipulationsbereiches aufgenommen, gedreht und/oder verschoben und dadurch jeweils in stapel- oder palettierfähige Anordnung zueinander gebracht werden. Die auf diese Weise nacheinander bereit gestellten Anordnungen können anschließend zur Ausbildung von gestapelten Artikel-, Stückgut- und/oder Gebindelagen übereinander gestapelt und/oder palettiert werden. Zuvor jedoch werden bei dem erfindungsgemäßen Verfahren die Artikel, Stückgüter und/oder Gebinde der Handhabungs- und/oder Gruppierstation als paarweise oder dreifach übereinander gestapelte Paar- oder Dreifachgruppen übergeben, womit der Handhabungsdurchsatz und damit auch der Stapel- bzw. Palettierungsdurchsatz in einem gegebenen Zeitraum nahezu verdoppelt werden kann, sofern die Zuführeinrichtungen zur Bereitstellung der einzeln hintereinander beförderten Artikel, Stückgüter oder Gebinde in entsprechendem Umfang beschleunigt werden können. Bereits eine Ausbildung einzelnen Paargruppierungen mit jeweils paarweise übereinander gestapelten Artikeln, Stückgütern und/oder Gebinden, die der Handhabungs- und/oder Manipulationseinrichtung zur Verfügung gestellt werden, damit diese sie drehen, verschieben etc. kann, sorgt im Idealfall für eine Verdoppelung des Durchsatzes. Zwangsläufig erfolgt auch die Palettierung dieser zu Doppellagen zusammengeschobenen und/oder gedrehten Paargruppierungen von Artikeln, Stückgütern und/oder Gebinden in annähernd halbierten Zeiträumen.

Die Stapelung der Gebinde, Stückgüter oder Artikel erfolgt bereits während des Gebindetransports mit Hilfe von Stapelmodulen, wahlweise auch mittels mehrerer in Reihe geschalteter Stapelmodule. Bestenfalls sind diese Stapelmodule unmittelbar vor der Gruppierung angeordnet, um auf diese Weise den nachfolgenden Transport der gestapelten Gebinde möglichst kurz und prozesssicher zu halten. Durch diese Entzerrung des Prozesses »Stapeln und Gruppieren« sind wesentlich höhere Taktzeiten und somit deutlich reduzierte Gruppierzeiten möglich. Wie erwähnt, können die an die Handhabungs- und/oder Gruppierstation übergebenen gestapelten Artikel-, Stückgut- und/oder Gebindegruppen vorzugsweise in einem der Handhabungs- und/oder Gruppierstation in Förderrichtung vorgeordneten, insbesondere in einem räumlich unmittelbar vorgeordneten Stapelbereich zweifach oder dreifach übereinander gestapelt werden.

Für die Umsetzung des erfindungsgemäßen Verfahrens eignen sich bspw. sog. Förderweichen, mit deren Hilfe die gestapelten Artikel-, Stückgut- und/oder Gebindegruppen gestapelt werden können, bevor sie anschließend als gestapelte Artikel-, Stückgut- oder Gebindegruppen gedreht, verschoben oder umgesetzt werden können. Diese optional zu verstehenden Förderweichen ermöglichen es, einzelne Artikel, Stückgüter und/oder Gebinde jeweils im Förderverlauf in unterschiedlichen Höhen abgeben und dadurch aufeinander zu stapeln. Bei einer alternativen Variante des Verfahrens können die gestapelten Artikel-, Stückgut- und/oder Gebindegruppen auch mittels separater, der Handhabungs- und/oder Gruppierstation vorgeordneter Greifeinrichtungen gestapelt werden, welche einzelne Artikel, Stückgüter und/oder Gebinde von Horizontalfördereinrichtungen oder Zuführeinrichtungen aufnehmen und auf jeweils andere Artikel, Stückgüter und/oder Gebinde aufsetzen und diese dadurch aufeinander stapeln.

Von Vorteil kann es außerdem sein, wenn die Handhabungs- und/oder Manipulationseinrichtung der Handhabungs- und/oder Gruppierstation die paarweise oder dreifach übereinander gestapelten Artikel-, Stückgut- und/oder Gebindegruppen zum Aufnehmen, Drehen und/oder Verschieben innerhalb des Manipulationsbereiches in variabel einstellbaren Höhen ergreifen kann, da hierdurch auch Gebinde- oder Stückgutgruppen zuverlässig erfasst werden können, die unregelmäßige Seitenkanten aufweisen, insbesondere unterschiedliche Außenumfänge in unterschiedlichen Höhen.

Wahlweise kann das Verfahren zudem vorsehen, dass die Handhabungs- und/oder Manipulationseinrichtung der Handhabungs- und/oder Gruppierstation einzelne Artikel von paarweise übereinander gestapelten Artikel-, Stückgut- und/oder Gebindegruppen oder Artikelpaare von dreifach übereinander gestapelten Artikel-, Stückgut- und/oder Gebindegruppen von dem jeweils darunter befindlichen Artikel, Stückgut oder Gebinde bzw. Artikel-, Stückgut- oder Gebindepaar abnimmt und an anderer Stelle innerhalb des Manipulationsbereiches platziert und/oder der Handhabungs- und/oder Gruppierstation übergibt. Außerdem kann es hierbei von Vorteil sein, wenn bei dem Verfahren der/das unterhalb des abgenommenen Artikels, Stückguts oder Gebindes verbleibende Artikel, Stückgut oder Gebinde bzw. Artikel-, Stückgut- oder Gebindepaar in einem nachfolgenden Handhabungsschritt von der Handhabungs- und/oder Manipulationseinrichtung übernommen und der Handhabungs- und/oder Gruppierstation übergeben wird.

Weiterhin schlägt die vorliegende Erfindung zur Erreichung des oben genannten Ziels eine Anordnung von in Förderrichtung aufeinander folgenden Förder-, Handhabungs- und/oder Palettierstationen zur Förderung, Handhabung, Manipulierung, Stapelung und/oder Palettierung von Artikeln, Stückgütern und/oder Gebinden vor. Diese erfindungsgemäße Anordnung umfasst zumindest eine Handhabungs- und/oder Gruppierstation, die eine Handhabungs- und/oder Manipulationseinrichtung zum Aufnehmen, Drehen und/oder Verschieben der Artikel, Stückgüter und/oder Gebinde innerhalb eines definierten Manipulationsbereiches aufweist. Die Anordnung umfasst weiterhin eine der Handhabungs- und/oder Gruppierstation in Förderrichtung nachgeordnete Palettierstation zum Stapeln und/oder Palettieren von Anordnungen stapel- oder palettierfähiger Artikel, Stückgüter und/oder Gebinde. Außerdem sieht die erfindungsgemäße Anordnung eine der Handhabungs- und/oder Gruppierstation in Förderrichtung vorgeordnete Stapelstation zum paarweisen oder dreifachen Übereinanderstapeln von Artikeln, Stückgütern und/oder Gebinden vor ihrer Übergabe an die Handhabungs- und/oder Gruppierstation vor. Vorzugsweise ist hierbei die Stapelstation der Handhabungs- und/oder Gruppierstation in Förderrichtung vorgeordnet, insbesondere räumlich unmittelbar vorgeordnet ist. Die Stapelstation kann bspw. mit der Handhabungs- und/oder Gruppierstation in integrierter Bauweise oder in sog. Blockbauweise zusammengefasst sein.

Die Stapelstation kann wahlweise Fördereinrichtungen mit Förderweichen zur Übergabe einzelner Artikel, Stückgüter und/oder Gebinde jeweils in unterschiedlichen Höhen und zu deren Aufeinanderstapelung umfassen. Wahlweise kann die Stapelstation auch separate Greifeinrichtungen zum Aufnehmen einzelner Artikel, Stückgüter und/oder Gebinde von Horizontalfördereinrichtungen oder Zuführeinrichtungen und zum Aufsetzen auf jeweils andere Artikel, Stückgüter und/oder Gebinde umfassen.

Eine weitere Ausführungsvariante der erfindungsgemäßen Anordnung kann vorsehen, dass eine Handhabungs- und/oder Manipulationseinrichtung der Handhabungs- und/oder Gruppierstation eine verschiebbar, drehbare und/oder heb- und senkbare Greifeinheit mit gegeneinander zustellbaren Greifbacken oder -balken zum Erfassen und Manipulieren der paarweise oder dreifach übereinander gestapelten Artikel-, Stückgut- und/oder Gebindegruppen zu deren Aufnehmen, Drehen und/oder Verschieben innerhalb des Manipulationsbereiches umfasst. Hierbei kann insbesondere vorgesehen sein, dass die gegeneinander zustellbaren Greifbacken oder -balken der Greifeinheit jeweils variabel an unterschiedliche Konturen der zu greifenden Seitenflächen der Artikel-, Stückgut- und/oder Gebindegruppen anpassbar sind. Ein solcher anpassbarer Greifer dient dem sicheren Erfassen der Doppel- oder Dreifachstapel, insbesondere wenn diese unregelmäßige Seitenkanten oder variierende Umfangskonturen in unterschiedlichen Höhen aufweisen. Vorzugsweise können die gegeneinander zustellbaren Greifbacken oder -balken der Greifeinheit gelenkig gelagert und innerhalb eines definierbaren Verstellwinkels um horizontale Schwenkwinkel verstellbar ausgebildet sein. Auf diese Weise ist ein zuverlässiges Greifen in variabel einstellbaren Höhen möglich.

Die erfindungsgemäße Anordnung kann eine Handhabungs- und/oder Manipulationseinrichtung vorsehen, die einen im Bereich der Handhabungs- und/oder Gruppierstation in zwei horizontalen Achsen beweglichen Portalroboter mit einer in vertikaler Achse verstellbaren und/oder um die vertikale Achse rotierbaren Greifeinheit umfasst. Alternativ hierzu kann die Anordnung auch eine Handhabungs- und/oder Manipulationseinrichtung vorsehen, die einen im Bereich der Handhabungs- und/oder Gruppierstation beweglichen Parallelkinematikroboter mit drehbarer Greifeinheit umfasst. Solche Parallelkinematikroboter werden allgemein auch als Tripode (mit drei Armen) bzw. (mit vier Armen) als Quadpode oder auch als Deltaroboter bezeichnet. Diese Deltaroboter oder Parallelkinematikroboter weisen typischerweise drei oder vier um horizontale Schwenkachsen bewegliche Oberarme mit jeweils daran angelenkten Unterarmpaaren auf, deren untere Enden in beweglichen Anlenkungen an einem sog. TCP bzw. Tool-Center-Point mit dem daran angeordneten Greifwerkzeug zusammengeführt sind, so dass das Greifwerkzeug mittels variabler motorischer Stellbewegungen der Oberarme innerhalb eines durch die Abmessungen der Arme und der maximalen Verstellwinkel der Oberarme gegebenen Bewegungsraumes nahezu beliebig und in sehr hoher Geschwindigkeit im Raum sowie in der Höhe verstellt werden kann. Sofern der TCP drehbar ausgebildet ist, kann das Greifwerkzeug zudem in gewünschter Weise rotieren oder schwenken. Als weitere Alternative kann die Handhabungs- und/oder Manipulationseinrichtung zudem einen beweglichen und um mehrere Achsen schwenkbaren Mehrachsroboter mit im Raum verstellbarerer und/oder drehbarer Greifeinheit umfassen.

Es sei an dieser Stelle erwähnt, dass alle Aspekte, die zuvor im Zusammenhang mit Ausführungsvarianten des erfindungsgemäßen Verfahrens erwähnt wurden, sich gleichermaßen auf die verschiedenen Ausführungsvarianten der erfindungsgemäßen Anordnung beziehen und in diesem Zusammenhang gelesen werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer einfachen Variante einer Transportstrecke, in der eine Lagenbildung aus hintereinander transportierten Artikeln erfolgt, wonach die Artikellagen anschließend auf einem Stapelplatz palettiert werden.
Fig. 2 zeigt eine schematische Seitenansicht einer Ausführungsvariante einer Stapelstation, die Bestandteil eines Zuförderbereichs in der Transportstrecke gemäß Fig. 1 ist.
Fig. 3 zeigt eine schematische Seitenansicht einer zweiten Ausführungsvariante der Stapelstation gemäß Fig. 1.
Fig. 4A und Fig. 4B zeigen in zwei schematischen Seitenansichten sinnvolle Stapelrichtungen einer dritten Ausführungsvariante der Stapelstation entsprechend Fig. 1.
Fig. 5 zeigt eine schematische Darstellung einer Ausführungsvariante einer Handhabungs- und/oder Manipulationseinrichtung, die Bestandteil der Stapelstation gemäß Fig. 1 ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

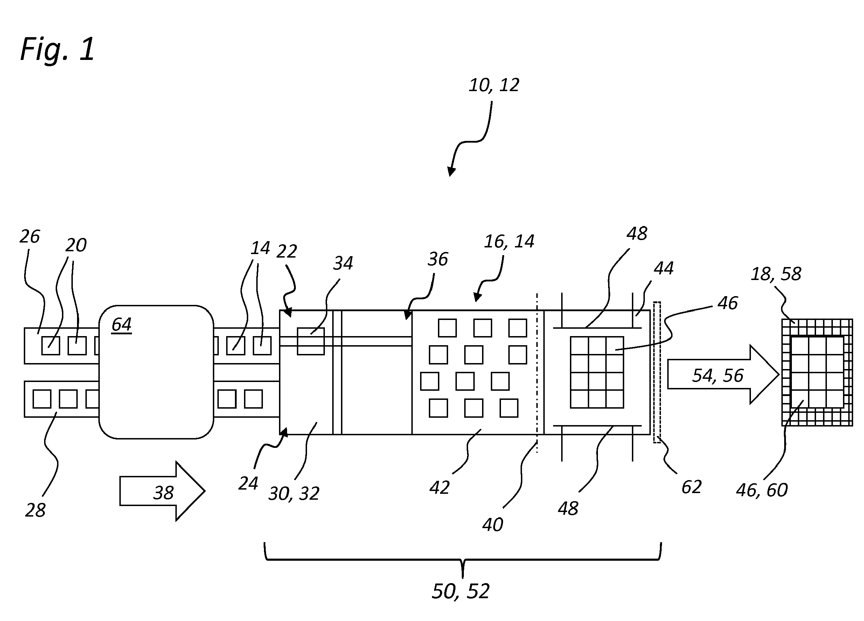

Die Draufsicht der Fig. 1 zeigt in sehr schematischer Weise eine einfache Variante einer Transportstrecke 10 einer erfindungsgemäßen Förder-, Handhabungs- und Palettierstation 12, in der eine Lagenbildung aus in mehreren Reihen hintereinander transportierten Artikelpaaren 14 erfolgen soll. Nach dem Passieren der Transportstrecke 10 werden die aus den Artikelpaaren 14 gebildeten Lagen 16 auf einem Stapelplatz 18 palettiert, was in der weiteren Folge noch näher erläutert wird. Die in der Darstellung der Fig. 1 lediglich schematisch angedeuteten Artikelpaare 14 bestehen jeweils aus zwei gleichgroßen, ungefähr fluchtend übereinander gestapelten Artikeln 20, die in dieser Anordnung die Transportstrecke 10 durchlaufen und jeweils gemeinsam behandelt, manipuliert gruppiert und in die zur Palettierung bzw. Stapelung benötigte regenmäßige Anordnung gebracht werden. Normalerweise sind die beiden Artikel 20 eines gestapelten Artikelpaares 14 nur lose aufeinander gelegt; sie können jedoch wahlweise auch leicht haftend aneinander fixiert sein, bspw. durch Aufbringen eines Klebepunktes oder einer Haftfläche an der Kontaktfläche zwischen der Bodenfläche des oberen Artikels 20 und der Oberseite des darunter befindlichen Artikels 20.

Wenn im Zusammenhang der Beschreibung des Ausführungsbeispiels lediglich von Artikeln 20 die Rede ist, so können damit alle Arten von förderbaren, manipulierbaren, gruppierbaren, stapelbaren und/oder palettierfähigen Paketen, Stückgütern, Gebinden oder sonstigen Gegenständen gemeint sein. Der hier allgemein verwendete Begriff der Artikel 20 ist daher umfassend zu verstehen und meint gleichermaßen auch die erwähnten förderbaren, manipulierbaren, gruppierbaren, stapelbaren und/oder palettierfähigen Pakete, Stückgüter oder Gebinde. Wenn im Zusammenhang der Beschreibung die Ausführungsbeispiels der Erfindung außerdem fast ausschließlich von Artikelpaaren 14 die Rede ist, so ist dies keinesfalls einschränkend zu verstehen, sondern umfasst in Abweichung vom Wortsinn des Paares auch Dreifachstapel von förderbaren, manipulierbaren, gruppierbaren, stapelbaren und/oder palettierfähigen Artikeln 20, Paketen, Stückgütern, Gebinden oder sonstigen Gegenständen, die sich jeweils wahlweise nicht nur paarweise, sondern auch dreifach übereinander stapeln lassen. Es sei daher an dieser Stelle ausdrücklich betont, dass der Begriff des Artikelpaares 14 im vorliegenden Zusammenhang - in Abweichung vom strengen Wortsinn des Paarbegriffs - umfassend zu verstehen ist, denn er meint gleichermaßen auch die erwähnten förderbaren, manipulierbaren, gruppierbaren, stapelbaren und/oder palettierfähigen Dreifachstapel von Artikeln 20, Paketen, Stückgütern oder Gebinden.

Die Transportstrecke 10 der schematisch gezeigten Förder-, Handhabungs- und Palettierstation 12 umfasst im gezeigten Ausführungsbeispiel der Fig. 1 zwei allgemein als Zuführstationen 22 bzw. 24 bezeichnete parallele Transportspuren 26 und 28, auf denen in einem Normalzustand jeweils ununterbrochene Reihen von Artikelpaaren 14 zu je zwei aufeinander gestapelten Artikeln 20 zu einem allgemein als Lagenbildungsplatz 30 bezeichneten Gruppiertisch 32 befördert und im Bereich der Zuführstationen 22 und 24 an diesen übergeben werden. Der Gruppiertisch 32 umfasst eine Handhabungs- und/oder Manipulationseinrichtung 34 zum Aufnehmen, Drehen und/oder Verschieben der auf den Gruppiertisch 32 beförderten Artikelpaare 14 und zur Bildung einer losen Doppellage 16 (bzw. Dreifachlage bei dreifach übereinander gestapelten Artikeln) aus den Artikelpaaren 14. Als obere oder erste Zuführstation 22 wird der Raum oder räumliche Bereich verstanden, innerhalb dessen die Handhabungs- und/oder Manipulationseinrichtung 34 ein dort bereitgestelltes Artikelpaar 14 übernehmen und verschieben und/oder drehen kann. Im gezeigten Ausführungsbeispiel wird die obere oder erste Zuführstation 22 durch die obere Transportspur 26 gebildet bzw. mit Artikelpaaren 14 beliefert. Als untere oder zweite Zuführstation 24 wird der Raum oder räumliche Bereich verstanden, innerhalb dessen die Handhabungs- und/oder Manipulationseinrichtung 34 ein dort bereitgestelltes Artikelpaar 14 übernehmen und verschieben und/oder drehen kann. Im gezeigten Ausführungsbeispiel wird die untere oder zweite Zuführstation 24 durch die untere Transportspur 28 gebildet bzw. mit Artikelpaaren 14 beliefert. Der Bereich, an dem die Handhabungs- und/oder Manipulationseinrichtung 34 die Artikelpaare 14 in der gewünschten und für die Erzeugung eines vorgegebenen Lagenbildes 16 freigibt, wird allgemein als Freigabeposition 36 bezeichnet.

Die mit der Handhabungs- und/oder Manipulationseinrichtung 34 durch Verschieben und/oder Drehen der Artikelpaare 14 gebildete lose Doppellage 16 wird nach ihrer mittels der Handhabungs- und/oder Manipulationseinrichtung 34 durchgeführten Zusammenstellung und nach Passieren der Freigabeposition 36 zunächst in Förderrichtung 38 gegen eine Anschlageinrichtung 40 geschoben, die bspw. durch ein vertikal heb- und senkbares Anschlagblech gebildet sein kann, das zum Zusammenschieben der Doppellage 16 nach oben über die Ebene des Gruppiertisches 32 oder Lagenbildungsplatzes 30 gehoben und zum weiteren Transport der in Förderrichtung 38 lückenlos zusammengeschobenen Doppellage 16 wieder nach unten gesenkt werden kann, d.h. unterhalb eine Förderebene, auf der sich die Artikelpaare 14 und die Doppellage 16 in Förderrichtung 38 bewegen. Danach wird diese Doppellage 16 an Artikelpaaren 14 mittels einer geeigneten Horizontalfördereinrichtung 42 nach rechts zu einem Lagenbildungstisch 44 befördert, auf dem durch Zusammenschieben der Artikelpaare 14 der losen Doppellage 16 quer zur Förderrichtung 38 eine geschlossene Doppellage 46 aus den Artikelpaaren 14 gebildet wird. Zu dem genannten Zweck des Zusammenschiebens weist der Lagenbildungstisch 44 beidseitig der Transportstrecke 10 geeignete Schiebereinrichtungen 48 auf, die in senkrechter Richtung zur Förderrichtung 38 der Doppellagen 16 bzw. 46 zustellbar sind, um die Artikelpaare 14 der losen Doppellage 16 nach Bedarf aneinander schieben zu können, bis die geschlossene Doppellage 46 entsprechend Fig. 1 entsteht, die weitgehend keine Längs- und Querlücken zwischen den aneinander stehenden Artikelpaaren 14 mehr aufweist.

Es sei an dieser Stelle erwähnt, dass sich die erwähnte Horizontalfördereinrichtung 42, die sich zumindest zwischen dem Lagenbildungsplatz 30 bzw. dem Gruppiertisch 32 und dem Lagenbildungstisch 44 befindet, ebenso vom Lagenbildungsplatz 30 mit der zugeordneten Handhabungs- und/oder Manipulationseinrichtung 34 bis zum Lagenbildungstisch 44 erstrecken kann, da die Artikelpaare 14, die lose Doppellage 16 sowie die geschlossene Doppellage 46 vorzugsweise kontinuierlich in Förderrichtung 38 zum Stapelplatz 18 hin befördert werden.

Der Gruppiertisch 32, der den Lagenbildungsplatz 30 darstellt, die nachfolgende bzw. in Förderrichtung nachgeordnete Horizontalfördereinrichtung 42 mit der Anschlageinrichtung 40 sowie der dieser Horizontalfördereinrichtung 42 nachfolgende bzw. in Förderrichtung 38 nachgeordnete Lagenbildungstisch 44 mit den seitlich zustellbaren Schiebereinrichtungen 48 bilden gemeinsam den Manipulationsbereich 50 im Sinne der vorliegenden Erfindung, da sie sowohl die Handhabungs- als auch die Gruppierstation 52 umfasst, der in Förderrichtung 38 eine Palettierstation 54 zum Stapeln und/oder Palettieren der stapel- oder palettierfähigen Artikelpaare 14, die in der Gruppierstation 52 zu Doppellagen 16 bzw. 46 zusammengefasst wurden, aufweist.

Als Handhabungs- und/oder Manipulationseinrichtung 34 wird im Zusammenhang der vorliegenden Erfindung jede Einrichtung angesehen, die in der Lage und geeignet ist, die von den Transportspuren 26 und 28 bzw. von den Zuführstationen 22 und 24 an den Gruppiertisch 32 oder Lagenbildungsplatz 30 übergebenen Artikelpaare 14, Paketpaare Stückgut- und/oder Gebindepaare in eine gewünschte Richtung zu verschieben und/oder um ihre Vertikalachse(n) zu drehen, um ein gewünschtes Lagenbild 16 herzustellen. Dieses Lagenbild 16 wird, wie oben erwähnt, anschließend durch Schieben gegen die Anschlageinrichtung 40 sowie durch seitliches Aneinanderschieben mittels der Schiebereinrichtungen 48 verdichtet, um die Lücken zwischen den zum gewünschten geschlossenen Lagenbild 46 zusammengeschobenen Artikelpaaren 14 zu verringern. Dieser Vorgang kann bspw. im Bereich des Lagenbildungstischs 44 durchgeführt werden, der dem Gruppiertisch 32 mit der ihm zugeordneten Handhabungs- und/oder Manipulationseinrichtung 34 nachgeordnet ist.

Nach dem Ausbilden der palettierbaren Doppellage 46 auf dem Lagenbildungstisch 44 wird die geschlossene Doppellage 46 mittels einer geeigneten Übergabe- und/oder Transporteinrichtung 56, die hier nur durch die Bezugsziffer in einem Pfeil angedeutet und die Teil der Palettierstation 54 ist, als komplette Doppellage 46 auf dem Stapelplatz 18, ggf. durch Stapeln auf dort bereits liegenden palettierten Doppellagen 46, abgelegt. Die zuunterst liegende Lage 46 kann insbesondere auf einer Palette 58 o. dgl. abgelegt sein. Sobald auf der Palette 58 eine definierte Maximalzahl von Lagen 46 übereinander abgelegt sind, kann der dadurch gebildete komplette Lagenstapel 60 zum weiteren Verpacken und/oder zum Versand oder zur Einlagerung abtransportiert werden. Zwischen dem Lagenbildungstisch 44 und der Übergabe- und/oder Transporteinrichtung 56 kann bei Bedarf eine Überschubeinrichtung 62 wie bspw. ein klappbares Überschubblech o. dgl. angeordnet sein, die/das die Übergabe zu einer Transporteinrichtung unterstützen kann.

Im Unterschied zur gezeigten Anordnung kann der in Fig. 1 nur schematisch angedeutete Manipulationsbereich 50 auch mehr als die gezeigten Module aufweisen, die jeweils hintereinander angeordnet sind. So können bspw. zwei gleichartige Gruppiertische 32 oder Lagenbildungsplätze 30 unmittelbar hintereinander angeordnet sein, um die Verarbeitungsgeschwindigkeit im Bereich der Transportstrecke 10 zu erhöhen. Ebenso kann dem Lagenbildungstisch 44 ein Übergabebereich o. dgl. nachgeordnet sein, der mit einem Greifer wie bspw. einem Jalousiegreiferkopf ausgestattet ist, der komplette Doppellagen 46 übernehmen und räumlich versetzen kann, um sie auf dem Stapelplatz 18 übereinander zu stapeln und dort zu einem Lagenstapel 60 zu palettieren.

Weiterhin umfasst die in Fig. 1 gezeigte Förder-, Handhabungs- und Palettierstation 12 einen der Handhabungs- und/oder Gruppierstation 52 in Förderrichtung 38 vorgeordnete Stapelstation 64 zum paarweisen oder dreifachen Übereinanderstapeln der auf den Transportspuren 26 und 28 sequenziell angeförderten Artikel 20 und zum Ausbilden der Artikelpaare 14 oder Dreifachstapel an Artikeln 20 vor ihrer Übergabe an die Handhabungs- und/oder Gruppierstation 52. Im gezeigten Ausführungsbeispiel ist die Stapelstation 64 im Bereich der beiden allgemein als Zuführstationen 22 bzw. 24 bezeichneten parallelen Transportspuren 26 und 28 angeordnet, auf denen zunächst jeweils ununterbrochene Reihen von Artikeln 20 zur Stapelstation 64 befördert, dort paarweise oder dreifach übereinander gestapelt und anschließend zu je zwei (oder wahlweise auch drei) aufeinander gestapelten Artikeln 20, d.h. als Artikelpaare 14, zum Lagenbildungsplatz 30 bzw. Gruppiertisch 32 befördert und im Bereich der Zuführstationen 22 und 24 an diesen übergeben werden. Wie es die Fig. 1 andeutungsweise erkennen lässt, ist die Stapelstation 64 der Handhabungs- und Gruppierstation 52 in Förderrichtung 38 räumlich unmittelbar vorgeordnet. Die Stapelstation 64 kann bspw. mit der Handhabungs- und/oder Gruppierstation 52 in integrierter Bauweise oder in sog. Blockbauweise zusammengefasst sein.

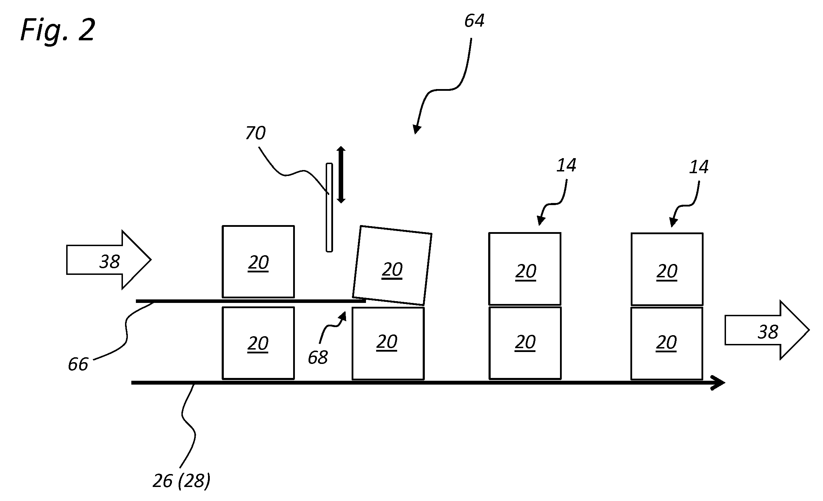

Die Fig. 2 zeigt eine schematische Seitenansicht einer ersten Ausführungsvariante der Stapelstation 64, die Bestandteil des Zuförderbereichs in der Transportstrecke 10 gemäß Fig. 1 ist. Die Stapelstation 64 befindet sich entsprechend Fig. 1 im Bereich der allgemein als Zuführstationen 22 bzw. 24 bezeichneten parallelen Transportspuren 26 bzw. 28, auf denen jeweils in regelmäßigen Abständen Artikel 20 in Förderrichtung 38 befördert werden. Zu erkennen ist in der schematischen Seitenansicht der Fig. 2 lediglich eine der beiden Transportspuren, in diesem Fall die obere bzw. linke Transportspur 26. Dieselbe Anordnung befindet sich jedoch auch in identischer Form auf der unteren bzw. rechten Transportspur 28 (vgl. hierzu die Fig. 1). Unmittelbar oberhalb der Transportspur 26 befindet sich eine ergänzende obere Transportspur 66, auf der ebenfalls in regelmäßigen Abständen Artikel 20 in Förderrichtung 38 befördert werden. Im Bereich des Endes der oberen Transportspur 66 ist eine Förderweiche 68 gebildet, mittels der übereinander beförderte Artikel 20 zu Artikelpaaren 14 gestapelt werden. Die Förderweiche 68 kann wie gezeigt durch exakt parallel verlaufende Transportspuren 26 und 66 gebildet sein, die in Transportrichtung 38 exakt fluchten. Wahlweise kann die Förderweiche 68 auch durch schräg zulaufende Transportspuren 26 und 66 gebildet sein, bei der bspw. die obere Transportspur 66 in Förderrichtung 38 schräg nach unten in Richtung zur unteren Transportspur 26 geneigt ist. Wahlweise können die Transportspuren 26 und 66 auch seitlich zueinander führen, was jedoch in der Darstellung der Fig. 2 nicht deutlich gemacht werden kann.

Um am Ende der ergänzenden oberen Transportspur 66, die im Bereich der Stapelstation 64 endet, gleichmäßige Artikelpaare 14 zu bilden, bei denen die aufeinander gestapelten Artikel 20 jeweils exakt miteinander fluchten, ist es wichtig, dass auch die Positionen der übereinander auf der unteren Transportspur 26 und auf der oberen Transportspur 66 in Förderrichtung 38 beförderten Artikel 20 möglichst exakt miteinander fluchten. Um dies zu erreichen, ist es einerseits sinnvoll, die Fördergeschwindigkeiten der beiden übereinander befindlichen Transportspuren 26 und 66 zu synchronisieren. Ggf. kann es darüber hinaus sinnvoll sein, mit geeigneten Rückhalteeinrichtungen 70, gebildet bspw. durch einen vertikal beweglichen Rückhaltebalken entsprechend Fig. 2, die Artikel 20 auf der oberen Transportspur 66 bedarfsweise kurzzeitig abzubremsen bzw. diese bspw. durch kurze Beschleunigung der oberen Transportspur 66 kurzzeitig zu beschleunigen, um auf diese Weise die gewünschte Fluchtung der oberen und unteren Artikel 20 auf den Spuren 26 und 66 herzustellen.

Wie es die Fig. 2 erkennen lässt, werden die Artikel 20 am Ende der oberen Transportspur 66 an der Förderweiche 68 übereinander gestapelt, indem die Artikel 20 auf der oberen Spur 66 auf die jeweiligen Oberseiten der Artikel 20 der unteren Spur 26 abgelegt werden. Ohne Verzögerung oder Unterbrechung werden die solcherart gebildeten Artikelpaare 14 auf der Transportspur 26 weiterbefördert und an der Zuführstation 22 auf den als Lagenbildungsplatz 30 fungierenden Gruppiertisch 32 befördert, wo anschließend mittels der Handhabungs- und/oder Manipulationseinrichtung 34 die kompletten Artikelpaare 14 aufgenommen, verschoben und/oder gedreht werden können, wie dies zuvor anhand der Fig. 1 beschrieben wurde.

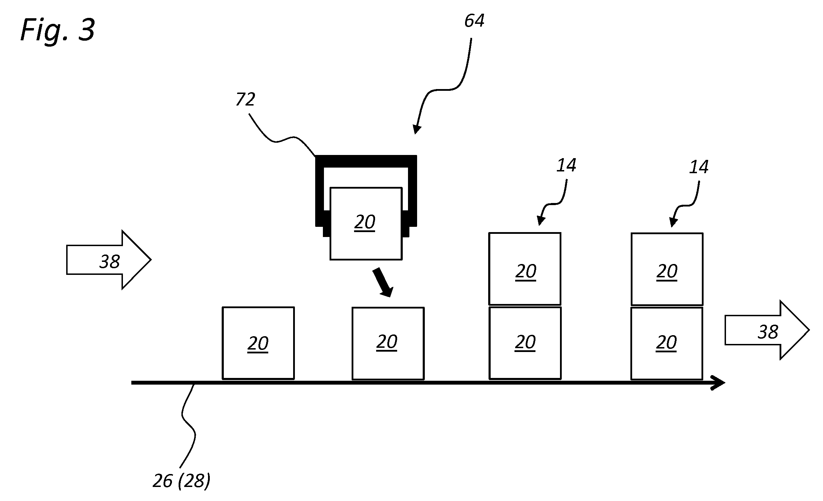

Die Fig. 3 zeigt eine schematische Seitenansicht einer zweiten Ausführungsvariante der Stapelstation 64, die Bestandteil des Zuförderbereichs in der Transportstrecke 10 gemäß Fig. 1 ist. Die Stapelstation 64 befindet sich wiederum im Bereich der allgemein als Zuführstationen 22 bzw. 24 bezeichneten parallelen Transportspuren 26 bzw. 28, auf denen jeweils in regelmäßigen Abständen Artikel 20 in Förderrichtung 38 befördert werden. Zu erkennen ist in der schematischen Seitenansicht der Fig. 3 lediglich eine der beiden Transportspuren, in diesem Fall die obere bzw. linke Transportspur 26. Dieselbe Anordnung befindet sich jedoch auch in identischer Form auf der unteren bzw. rechten Transportspur 28 (vgl. hierzu die Fig. 1).

Die in Fig. 3 gezeigte Stapelstation 64 sieht eine Stapelung der Artikel 20 zur Bildung der Artikelpaare 14 mittels separater Greifeinrichtungen 72 vor, welche einzelne Artikel 20 von einer hier nicht gezeigten Versorgungsspur entnehmen und auf jede Oberseite der auf der Transportspur 26 beförderten Artikel 20 aufsetzen. Die hier lediglich schematisch angedeutete Greifeinrichtung 72 kann z.B. Teil eines Handhabungsroboters sein, der bspw. durch einen mehrachsig im Raum beweglichen Roboter oder auch durch einen Portalroboter o. dgl. gebildet sein kann.

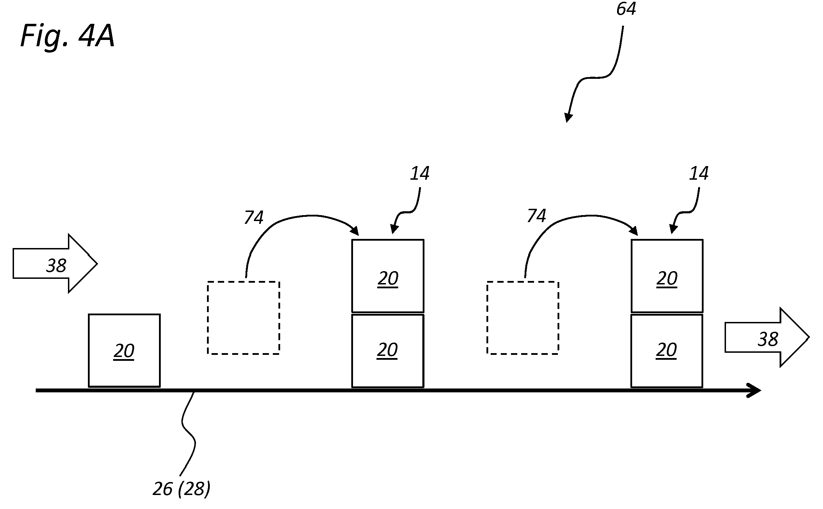

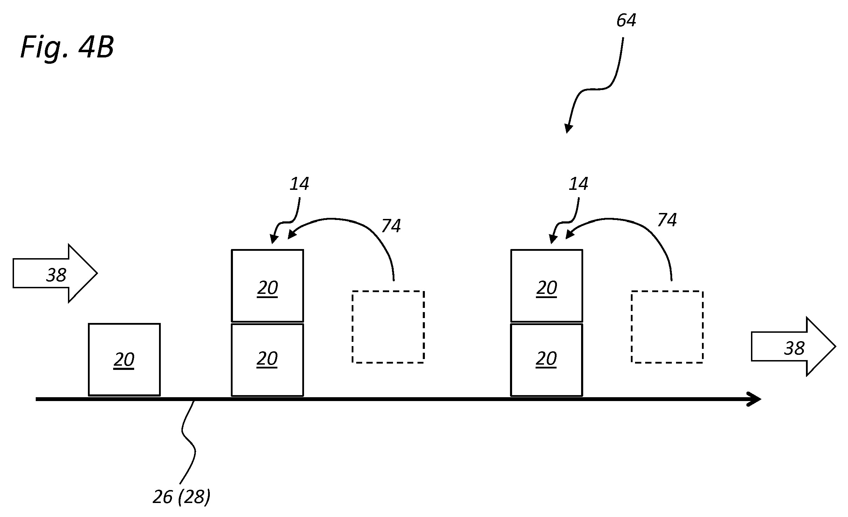

Weitere Varianten für die Stapelstation 64 als die in Fig. 2 und Fig. 3 gezeigten sind darüber hinaus denkbar. So zeigt die Fig. 4 eine solche weitere Variante der Stapelstation 64, bei der die auf den Transportspuren 26 und 28 beförderten Artikel 20 jeweils mittels einer Greifeinrichtung 72 übereinander gestapelt werden. Gezeigt sind in den Figuren 4A und 4B wiederum schematische Seitenansichten der oberen bzw. linken Transportspur 26. Die rechte bzw. untere Transportspur 28 (vgl. Fig. 1) ist jedoch in gleicher Weise aufgebaut, so dass die Stapelstation 64 beide Transportspuren 26 und 28 gleichermaßen umfasst. Wie es die Fig. 4A lediglich andeutet, kann bspw. jeder zweite Artikel 20 durch eine in Förderrichtung orientierte Greif-, Aufnahme und Absetzbewegung 74 einer Greifeinrichtung 72 (vgl. hierzu Fig. 3) auf den jeweils vor ihm beförderten Artikel 20 aufgesetzt werden, um auf diese Weise die gewünschten Artikelpaare 14 zu bilden. Ebenso denkbar ist es entsprechend der Darstellung der Fig. 4B, jeden zweiten Artikel 20 durch eine entgegen der Förderrichtung 38 orientierte Greif-, Aufnahme und Absetzbewegung 74 der Greifeinrichtung 72 (vgl. hierzu Fig. 3) auf den jeweils hinter ihm beförderten Artikel 20 aufzusetzen, um auf diese Weise die gewünschten Artikelpaare 14 zu bilden.

Auf die gezeigte Weise ist es möglich, die Leistung vorhandener Palettieranlagen zu erhöhen, ohne die Maschinenausstattung nennenswert zu verändern, denn die im Bereich der Zuführung zum Lagenbildungsplatz 30 gestapelten Artikel 20 ermöglichen es dem Gruppiertisch 32, entweder mit geringerer Geschwindigkeit die Artikelpaare 14 zu drehen und/oder zu verschieben oder in gleicher Geschwindigkeit eine höhere Anzahl von einzelnen Artikeln 20 insgesamt je Zeitintervall zu bewältigen, da immer gleichzeitig zwei Artikel 20 eines Artikelpaares 14 bewegt werden. Diese Zusammenfassung der Artikel 20 zu Paaren 14 (oder ggf. auch zu Dreifachstapeln von Artikeln) führt insgesamt zu einer spürbaren Leistungserhöhung der Förder-, Handhabungs- und Palettierstation 12, da in derselben Zeit bei grundsätzlich gleichen Umsetz- und Drehbewegungen der Handhabungs- und/oder Manipulationseinrichtung 34 der Gruppierstation 32 annähernd die doppelte Anzahl von Artikeln 20 bewegt und zur losen Doppellage 16 gruppiert werden können als dies bei nicht zu Paaren 14 zusammengefassten Artikeln 20 der Fall wäre.

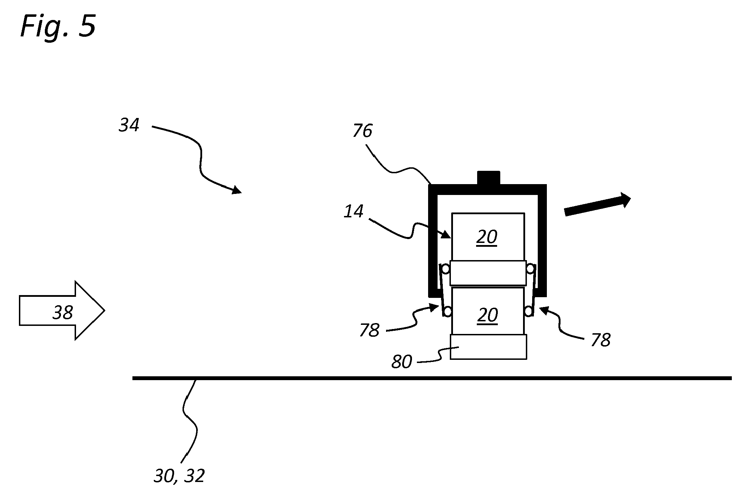

Die schematische Darstellung der Fig. 5 zeigt eine Ausführungsvariante der Handhabungs- und/oder Manipulationseinrichtung 34, die dem Gruppiertisch 32 zugeordnet ist und bspw. durch eine mittels Portalroboter verschiebbar, drehbare und/oder heb- und senkbare Greifeinheit 76 mit gegeneinander zustellbaren Greifbacken 78 zum Erfassen und Manipulieren der paarweise übereinander gestapelten Artikel 20 zu deren Aufnehmen, Drehen und/oder Verschieben innerhalb des Manipulationsbereiches 50 der Gruppierstation 32 (vgl. Fig. 1) gebildet ist. Wie es die Fig. 5 erkennen lässt, sind die gegeneinander zustellbaren Greifbacken 78 der Greifeinheit 76 jeweils variabel an unterschiedliche Konturen der zu greifenden Seitenflächen der Artikelpaare 14 anpassbar. Ein solcher anpassbarer Greifer 76 dient dem sicheren Erfassen der Doppel- oder Dreifachstapel, insbesondere wenn diese unregelmäßige Seitenkanten oder variierende Umfangskonturen in unterschiedlichen Höhen aufweisen, wie es die Fig. 5 andeutungsweise erkennen lässt.

Sinnvollerweise können die gegeneinander zustellbaren Greifbacken 78 der Greifeinheit 76 gelenkig gelagert und innerhalb eines definierbaren Verstellwinkels um horizontale Schwenkwinkel verstellbar ausgebildet sein. Auf diese Weise ist ein zuverlässiges Greifen der Artikelpaare 14 in variabel einstellbaren Höhen möglich. Da die Artikel 20 eines Artikelpaares 14 typischerweise nur lose übereinander gestapelt sind, dienen die Greibacken 78 der zuverlässigen Erfassung beider Artikel 20, auch wenn deren Seitenwände bspw. durch ein unteres Aufnahmetray 80 aus einer Karton- oder Kunststoffschale unregelmäßig bzw. im unteren Bereich und im Bodenbereich verbreitert sind, wie dies in Fig. 5 bei beiden Artikeln 20 angedeutet ist. Hierbei sind in dem Aufnahmetray 80 typischerweise mehrere einzelne Stückgüter gleicher Größe und Art zusammengefasst, so dass bei dem Artikel 20 typischerweise von einem Gebinde mit zusammengefassten und zusammengehaltenen Stückgütern bzw. Artikeln zu sprechen wäre.

Wahlweise kann die Handhabungs- und/oder Manipulationseinrichtung 34 einen im Bereich der Handhabungs- und/oder Gruppierstation 52 (vgl. Fig. 1) in zwei horizontalen Achsen beweglichen Portalroboter mit einer in vertikaler Achse verstellbaren und/oder um die vertikale Achse rotierbaren Greifeinheit 76 gemäß Fig. 5 umfasst. Ebenso denkbar ist es, dass die Handhabungs- und/oder Manipulationseinrichtung 34 einen im Bereich der Handhabungs- und/oder Gruppierstation 52 beweglichen Parallelkinematikroboter mit drehbarer Greifeinheit 76 umfasst. Darüber hinaus ist es denkbar, dass die Handhabungs- und/oder Manipulationseinrichtung 34 einen beweglichen und um mehrere Achsen schwenkbaren Mehrachsroboter mit im Raum verstellbarerer und/oder drehbarer Greifeinheit 76 umfasst.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Transportstrecke
- 12: Förder-, Handhabungs- und Palettierstation
- 14: Artikelpaare
- 16: Artikellagen, Lagenpaare, Doppellagen, lose Doppellage (aus Artikelpaaren), Lagenbild
- 18: Stapelplatz
- 20: Artikel
- 22: erste Zuführstation, linke Zuführstation, obere Zuführstation
- 24: zweite Zuführstation, rechte Zuführstation, untere Zuführstation
- 26: erste Transportspur, linke Transportspur, obere Transportspur
- 28: zweite Transportspur, rechte Transportspur, untere Transportspur
- 30: Lagenbildungsplatz
- 32: Gruppiertisch
- 34: Handhabungs- und/oder Manipulationseinrichtung
- 36: Freigabeposition
- 38: Förderrichtung
- 40: Anschlageinrichtung
- 42: Horizontalfördereinrichtung
- 44: Lagenbildungstisch
- 46: geschlossene Doppellage, zusammengeschobene Doppellage
- 48: Schiebereinrichtungen, Querschubeinrichtungen
- 50: Manipulationsbereich
- 52: Handhabungs- und/oder Gruppierstation
- 54: Palettierstation
- 56: Übergabe- und/oder Transporteinrichtung
- 58: Palette
- 60: Lagenstapel
- 62: Überschubeinrichtung, Überschubblech
- 64: Stapelstation
- 66: ergänzende Transportspur, obere Transportspur
- 68: Förderweiche
- 70: Rückhalteeinrichtung
- 72: Greifeinrichtung
- 74: Greif-, Aufnahme und Absetzbewegung, Stapelbewegung
- 76: Greifer, Greifeinheit
- 78: Greifbacken
- 80: Aufnahmetray

## Patentansprüche

1. Verfahren zur Beförderung, Handhabung, Manipulierung, Stapelung und/oder Palettierung von Artikeln (20), Stückgütern und/oder Gebinden, die in Förderrichtung (38) einer Handhabungs- und/oder Gruppierstation (52) zugeführt und dort mittels einer Handhabungs- und/oder Manipulationseinrichtung (34) innerhalb eines definierten Manipulationsbereiches (50) aufgenommen, gedreht und/oder verschoben und dadurch jeweils in eine stapel- oder palettierfähige Anordnung (46) zueinander gebracht werden, welche Anordnungen (46) anschließend zur Ausbildung von gestapelten Artikel-, Stückgut- und/oder Gebindelagen (60) übereinander gestapelt und/oder palettiert werden können, wobei die an die Handhabungs- und/oder Gruppierstation (52) übergebenen gestapelten Artikel-, Stückgut- und/oder Gebindegruppen (14) in einem der Handhabungs- und/oder Gruppierstation (52) in Förderrichtung (38) vorgeordneten, insbesondere in einem räumlich unmittelbar vorgeordneten Stapelbereich (64) zweifach oder dreifach übereinander gestapelt werden und wobei die Artikel (20), Stückgüter und/oder Gebinde der Handhabungs- und/oder Gruppierstation (52) als paarweise oder dreifach übereinander gestapelte Paar- oder Dreifachgruppen (14) übergeben werden.

2. Verfahren nach Anspruch 1, bei dem die gestapelten Artikel-, Stückgut- und/oder Gebindegruppen (14) mittels Förderweichen (68) gestapelt werden, welche einzelne Artikel (20), Stückgüter und/oder Gebinde jeweils in unterschiedlichen Höhen abgeben und dadurch aufeinander stapeln.

3. Verfahren nach Anspruch 1, bei dem die gestapelten Artikel-, Stückgut- und/oder Gebindegruppen (14) mittels separater, der Handhabungs- und/oder Gruppierstation (52) vorgeordneter Greifeinrichtungen (72) gestapelt werden, welche einzelne Artikel (20), Stückgüter und/oder Gebinde von Horizontalfördereinrichtungen oder Zuführeinrichtungen aufnehmen und auf jeweils andere Artikel (20), Stückgüter und/oder Gebinde aufsetzen und diese dadurch aufeinander stapeln.

4. Verfahren nach einem der Ansprüche 1 bis 3, bei dem die Handhabungs- und/oder Manipulationseinrichtung (34) der Handhabungs- und/oder Gruppierstation (52) die paarweise oder dreifach übereinander gestapelten Artikel-, Stückgut- und/oder Gebindegruppen (14) zum Aufnehmen, Drehen und/oder Verschieben innerhalb des Manipulationsbereiches (50) in variabel einstellbaren Höhen ergreift.

5. Anordnung von in Förderrichtung (38) aufeinander folgenden Förder-, Handhabungs- und/oder Palettierstationen (12) zur Förderung, Handhabung, Manipulierung, Stapelung und/oder Palettierung von Artikeln (20), Stückgütern und/oder Gebinden, mit:
- einer Handhabungs- und/oder Gruppierstation (52), die eine Handhabungs- und/oder Manipulationseinrichtung (34) zum Aufnehmen, Drehen und/oder Verschieben der Artikel (20), Stückgüter und/oder Gebinde innerhalb eines definierten Manipulationsbereiches (50) umfasst;
- mit einer der Handhabungs- und/oder Gruppierstation (52) in Förderrichtung (38) nachgeordneten Palettierstation (54) zum Stapeln und/oder Palettieren von stapel- oder palettierfähigen Artikel-, Stückgut- und/oder Gebindeanordnungen (46),
- und mit einer der Handhabungs- und/oder Gruppierstation (52) in Förderrichtung (38) vorgeordneten Stapelstation (64) zum paarweisen oder dreifachen Übereinanderstapeln von Artikeln (20), Stückgütern und/oder Gebinden vor ihrer Übergabe an die Handhabungs- und/oder Gruppierstation (52).

6. Anordnung nach Anspruch 5, bei der die Stapelstation (64) der Handhabungs- und/oder Gruppierstation (52) in Förderrichtung (38) vorgeordnet, insbesondere räumlich unmittelbar vorgeordnet ist.

7. Anordnung nach Anspruch 5 oder 6, bei der die Stapelstation (64) Fördereinrichtungen (66) mit Förderweichen (68) zur Übergabe einzelner Artikel (20), Stückgüter und/oder Gebinde jeweils in unterschiedlichen Höhen und zu deren Aufeinanderstapelung umfasst.

8. Anordnung nach Anspruch 5 oder 6, bei der die Stapelstation (64) separate Greifeinrichtungen (72) zum Aufnehmen einzelner Artikel (20), Stückgüter und/oder Gebinde von Horizontalfördereinrichtungen oder Zuführeinrichtungen und zum Aufsetzen auf jeweils andere Artikel (20), Stückgüter und/oder Gebinde umfasst.

9. Anordnung nach einem der Ansprüche 5 bis 8, bei der eine Handhabungs- und/oder Manipulationseinrichtung (34) der Handhabungs- und/oder Gruppierstation (52) eine verschiebbar, drehbare und/oder heb- und senkbare Greifeinheit (76) mit gegeneinander zustellbaren Greifbacken (78) oder -balken zum Erfassen und Manipulieren der paarweise oder dreifach übereinander gestapelten Artikel-, Stückgut- und/oder Gebindegruppen (14) zu deren Aufnehmen, Drehen und/oder Verschieben innerhalb des Manipulationsbereiches (50) umfasst, wobei die gegeneinander zustellbaren Greifbacken (78) oder -balken der Greifeinheit (76) jeweils variabel an unterschiedliche Konturen der zu greifenden Seitenflächen der Artikel-, Stückgut- und/oder Gebindegruppen (14) anpassbar sind.

10. Anordnung nach Anspruch 9, bei der die gegeneinander zustellbaren Greifbacken (78) oder -balken der Greifeinheit (76) gelenkig gelagert und innerhalb eines definierbaren Verstellwinkels um horizontale Schwenkwinkel verstellbar sind.

11. Anordnung nach einem der Ansprüche 5 bis 10, bei der die Handhabungs- und/oder Manipulationseinrichtung (34) einen im Bereich der Handhabungs- und/oder Gruppierstation (52) in zwei horizontalen Achsen beweglichen Portalroboter mit einer in vertikaler Achse verstellbaren und/oder um die vertikale Achse rotierbaren Greifeinheit (76) umfasst.

12. Anordnung nach einem der Ansprüche 5 bis 10, bei der die Handhabungs- und/oder Manipulationseinrichtung (34) einen im Bereich der Handhabungs- und/oder Gruppierstation (52) beweglichen Parallelkinematikroboter mit drehbarer Greifeinheit (76) umfasst.

13. Anordnung nach einem der Ansprüche 5 bis 10, bei der die Handhabungs- und/oder Manipulationseinrichtung (34) einen beweglichen und um mehrere Achsen schwenkbaren Mehrachsroboter mit im Raum verstellbarerer und/oder drehbarer Greifeinheit (76) umfasst.
